# EUROPÄISCHE PATENTANMELDUNG

(11) **EP 0 835 900 A2**
(43) Veröffentlichungstag der Anmeldung: **15.04.1998**
(21) Anmeldenummer: 97117760.5
(22) Anmeldetag: 14.10.1997
(51) Int. Cl.: C08J 7/04, C09D 5/18

(54) **Elastische Formteile**

(30) Priorität: 14.10.1996 DE 19642355
(71) Anmelder: Dr. Wolman GmbH, D-76547 Sinzheim (DE)
(72) Erfinder: Breuer, Michael, Dr., 76547 Sinzheim (DE); Seelmann-Eggebert, Hans-Peter, Dr., 67117 Limburgerhof (DE); Eckel, Agidius, Dr., 67150 Niederkirchen (DE); Seyffer, Hermann, Dr., 69123 Heidelberg (DE); Deutsch, Werner, 82299 Tuerkenfeld (DE)
(74) Vertreter: Langfinger, Klaus-Dieter, Dr.

(57) **Zusammenfassung**

Elastische Formteile, welche mit einer Mischung bestehend aus
a) einem polymeren Bindemittel und
b) einer blähgraphitenthaltenden intumeszierenden Zusammensetzung
beschichtet sind.

## Beschreibung

Die vorliegende Erfindung betrifft elastische Formteile, welche mit einer Mischung bestehend aus
a) einem polymeren Bindemittel und
b) einer blähgraphitenthaltenden intumeszierenden Zusammensetzung
beschichtet sind.

Weiterhin betrifft die Erfindung ein Verfahren zur brandschützenden Beschichtung elastischer Formkörper sowie die Verwendung von elastischen Formkörpern als Sitzmöbel oder Sitzmöbelpolster im Fahrzeugbau und Flugzeugbau.

Brandschutztechnische Ausrüstungen von Schaumstoffen sind seit langem bekannt. Dabei kann man im wesentlichen zwei unterschiedliche Ansätze unterscheiden:

In GB 1 463 069 und in DE-A-31 00 626 werden Schaumstoffe beschrieben, in welche bei der Herstellung brandschützende Zusätze eingearbeitet werden. Diese Einarbeitung hat den Nachteil, daß die mechanischen, insbesondere die dauerelastischen Eigenschaften des geschäumten Materials beeinträchtigt und die Luftdurchlässigkeit vermindert wird.

In DE-A-30 18 890 wird dagegen die oberflächliche Imprägnierung eines aufschäumenden Materials mit einem flexiblen aufschäumenden polymeren Material beschrieben. Dieses letztere aufschäumende Material enthält ein polymeres Bindemittel und eine schäumende Komponente, die wiederum aus einer Polyhydroxverbindung oder einer aromatischen Verbindung als kohlenstofflieferndes Element und einem schaumbildenden Element besteht. Als solche schaumbildenden Elemente werden anorganische Säuren oder solche Verbindungen genannt, die bei der Zersetzung anorganische Säuren ergeben, wie Phosphor- oder Halogenverbindungen. Derartig imprägnierte geschäumte Materialien lassen jedoch hinsichtlich des Brandschutzes noch zu wünschen übrig.

Der vorliegenden Erfindung lag daher die Aufgabe zugrunde, brandgeschützte elastische Formteile zu finden, bei denen die Brandschutzausrüstung die elastischen Eigenschaften der Formkörper nicht oder nur unwesentlich beeinflußt und die besonders wirksam gegen einen Brand geschützt sind. Weiterhin war es die Aufgabe der vorliegenden Erfindung ein wirkungsvolles Verfahren zur brandschutztechnischen Beschichtung elastischer Formteile zu finden.

Demgemäß wurden die eingangs erwähnten elastischen Formteile gefunden sowie ein Verfahren zur Brandschutzbeschichtung elastischer Formteile.

Elastische Formteile im Sinne der Erfindung sind beispielsweise Formteile, die im wesentlichen aus Schaumstoffen wie geschäumtem Polystyrol, geschäumten Polyolefinen wie Polyethylen und Polypropylen oder besonders aus Polyurethanschäumen bestehen. Die Formteile können jedoch auch aus anderen elastischen Materialien aufgebaut sein, wie Kautschuk, Gummi, Styrol-Butadien-Blockpolymeren und anderen Elastomeren. Besonders zu nennen sind auch Gummi-Haar-Polster, wie sie beispielsweise zur Polsterung von Sitzen, besonders von Bussen und Schienenfahrzeugen, Verwendung finden.

Bevorzugt sind elastische Formteile, deren Grundkörper aus Schaumstoff besteht.

Als polymere Bindemittel a) sind verschiedene Polymere in flüssiger, dispergierter oder gelöster Form geeignet. Besonders geeignet sind solche Polymere, die schwer entflammbar und/oder wenig brennbar sind, wie halogenhaltige Polymere oder solche mit großem Anteil an oxidierten Kohlenstoffatomen sowie Silikone. Weiterhin sind solche Polymere besonders geeignet, die gute Dauerelastizität und Gasdurchlässigkeit aufweisen. Dem Fachmann sind zahlreiche (Co-)Polymere, welche solche vorteilhaften Eigenschaften aufweisen, bekannt.

Besonders bevorzugt als polymeres Bindemittel a) ist ein Kunstharz oder eine Kunstharzdispersion oder eine Mischung mehrerer Kunstharze oder Kunstharzdispersionen ausgewählt aus der Gruppe bestehend aus Silikonen, Kautschuk, Polyacrylat, Styrolcopolymeren, Ethylencopolymeren, Polyvinylacetat und Polyvinylchlorid.

Unter den Silikonen sind besonders solche geeignet, welche nur wenig brennbar sind. Als geeignet haben sich beispielsweise wässrige Emulsionen von Methylphenylsilikonharzen, wie sie z.B. unter der Bezeichnung Silres® MP42E (Hersteller: Wacker-Chemie, Deutschland) erhältlich sind.

Als Kautschuk kommen neben natürlichem Kautschuk auch synthetische Kautschuke in Betracht. Aufgrund ihrer geringen Brennbarkeit sind besonders halogenhaltige Kautschuke wie Chloroprenkautschuk geeignet.

Unter den Polyacrylaten sind insbesondere solche geeignet, die einen hohen Anteil an freien Carboxylgruppen und/oder kurzkettige Alkoholreste wie Methyl, Ethyl, Propyl oder Butyl enthalten. Auch Copolymere aus Acrylaten/Acrylsäure und Ethylen sind hier zu nennen.

Unter den Styrolcopolymeren sind besonders Styrol-Butadien-Copolymere und Acrylnitril-Butadien-Styrol-Copolymere zu nennen.

Die genannten Polymeren können beispielsweise als Latices, Dispersionen, Emulsionen und als Plastisole, d.h. als Mischung mit hohem Anteil an Weichmachern, eingesetzt werden. Besonders PVC läßt sich vorteilhaft als Plastisol einsetzen.

Besonders geeignet als polymeres Bindemittel a) in den Beschichtungsmischungen sind Silikonharzdispersionen.

Die zweite Komponente in den Beschichtungsmischungen ist eine blähgraphitenthaltende intumeszierende Zusammensetzung. Als Intumeszenzmassen werden Materialien bezeichnet, die unter Hitzeeinwirkung aufschäumen und dabei einen isolierenden und hitzebeständigen Schaum ("Thermoschaum") bilden, der die darunter liegenden Flächen und Substrate vor der Feuer- und Hitzeeinwirkung schützt. Der Blähgraphit bildet zusammen mit den weiteren intumerzierenden Bestandteilen eine besonders wirkungsvolle brandhemmende Mischung.

Als Blähgraphit kommen alle handelsüblichen Blähgraphit-Präparationen in Betracht. Als besonders geeignet hat sich beispielsweise der Blähgraphit Expan® MBS (Hersteller: Tropag O. Ritter Nachf. GmbH, Deutschland) mit einem Blähvolumen von 200 - 230 cm³/g erwiesen. Der Anteil des Blähgraphits an der Komponente b) beträgt im allgemeinen 2 - 50 Gew.-%, vorzugsweise 5 - 30 Gew.-%.

Weiterhin enthalten die intumeszierenden Zusammensetzungen b) phosphorhaltige Stickstoffverbindungen.

Gut geeignete phosphorhaltige Stickstoffverbindungen b2) sind z.B. Ammonium-, Ammoniumpoly-, Melamin-, Dimelamin-, Harnstoff-, Dicyandiamid-, Semicarbazid-, Thioharnstoff-, Carbamid- und Guandinphosphate oder deren Mischungen. Bevorzugte Verbindungen b2) sind Ammoniumpolyphosphate und Melaminphosphate oder deren Gemische.

Der Gehalt der Komponente b2) in der intumeszierenden Zusammensetzung b) beträgt im allgemeinen 2 bis 50 Gew.-%, vorzugsweise 15 bis 40 Gew.-%, bezogen auf die Gesamtmasse der Zusammensetzung b).

Geeignete Polyalkohole b3) sind z.B. Glycerin, Ethylenglykol, Propylenglykol, Butylenglykol, Glycerinprodukte, Hexandiol, Diethylenglykol, Trimethylolethan, Trimethylolpropan, Tetraphenylethylenglycol, Di-Trimethylolpropan, 2,2-Dimethylolbutanol, Dipentaerythrit, Tripentaerythrit, EO/PO-Trimethylolpropan, EO/PO-Pentaerythrit, Zucker, Polysaccharide wie Stärke, Cellulose und Carboxymethylcellulose und deren Mischungen.

Bevorzugt sind schwerlösliche mehrwertige Alkohole wie Dipentaerythrit oder deren Gemische.

Der Gehalt der Komponente b3) in der intumeszierenden Zusammensetzung b) beträgt im allgemeinen 2 bis 40 Gew.-%, vorzugsweise 5 bis 25 Gew.-%, bezogen auf die Gesamtmasse der Zusammensetzung b).

Geeignete Treibmittel b4) sind Melaminderivate wie beispielsweise Melamincyanurate, Melaminphosphate, Melaminborate und nieder- oder hochmolekulare Polyethylenimine sowie in der Hitze CO₂ oder Wasser abspaltende Verbindungen wie Carbonsäuren, Dicarbonsäuren und deren Derivate sowie anorganische Salze wie CaCO₃ und Ammoniumcarbonat.

Bevorzugt sind im Wasser schwerlösliche Stickstoffverbindungen wie Melamin, Melamincyanurat und Dicyandiamid oder deren Gemische.

Der Gehalt der Komponente b4) in der intumeszierenden Mischung b) beträgt im allgemeinen 0 bis 15 Gew.-%, vorzugsweise 2 bis 12 Gew.-%, bezogen auf die Gesamtmasse der Zusammensetzung b).

Es hat sich als vorteilhaft herausgestellt, wenn die intumeszierende Mischung als Komponente b5) noch Zusatzstoffe enthält, z.B. anorganische Füllstoffe wie Calciumcarbonat, wasserfreisetzende Stoffe wie Aluminiumhydroxyd, Magnesiumhydroxyd, Calciumhydroxid und Bariumhydroxid, vorzugsweise Aluminiumhydroxid oder Magnesiumhydroxid, weiterhin Weichmacher, Verdicker, Verlaufsmittel, Entschäumer, Haftvermittler und insbesondere rheologische Zusätze.

Weitere geeignete Flammschutzadditive sind beispielsweise Borverbindungen wie Borsäure, Metallborate, Aminoborate und Borane, Zinkacetat, Bleiacetat, Aluminiumacetat, organische Halogenverbindungen, wie hochchlorierte aliphatische Kohlenwasserstoffe, Chlorparaffine, aliphatische und aromatische Bromverbindungen (z.B. Hexabromcyclododecan), Metallocene, wie Ferrocen, Azidodicarbonsäurediamide, roter Phosphor und organische Phosphorverbindungen, wie chlorhaltige Phosphorpolyole auf Basis oligomerer Phosphorsäureester.

Die Komponenten b5) können insgesamt in der intumeszierenden Zusammensetzung b) zu 0 bis 50 Gew.-%, vorzugsweise 5 bis 40 Gew.-% enthalten sein, bezogen auf die Gesamtmasse der Zusammensetzung b).

Besonders gut geeignete intumeszierende Mischungen enthalten als Komponente b2) Ammoniumphosphat, als Komponente b3) Dipentaerythrit, als Komponente b4) Dicyandiamid und als Komponente b5) Aluminiumhydroxid.

Vor der Beschichtung der Formteile werden die Komponenten a) und b) vermischt, so daß eine flüssige Beschichtungsmischung resultiert. Der Anteil der Komponente a) an der Gesamtmischung beträgt im allgemeinen 5 bis 70 Gew.-%, vorzugsweise 10 - 40 Gew.-% besonders bevorzugt 15 - 30 Gew.-%. Der Anteil der Komponente b) an der Gesamtmischung beträgt im allgemeinen 30 bis 95 Gew.-%, vorzugsweise 60 bis 90 Gew.-%, besonders bevorzugt 70 bis 85 Gew.-%. Die Gesamtmischung kann z.B. mit Wasser so verdünnt werden, daß eine der Auftragstechnik entsprechende angemessene Viskosität resultiert.

Die Beschichtung der elastischen Formteile kann z.B. durch Streichen, Rollen, Rakeln, Tauchen, Tränken oder Spritzen erfolgen. Besonders Spritzen hat sich als vorteilhaft erwiesen, weil durch den Spritzdruck ein Teil der Brandschutzmischung relativ tief in das elastische Grundmaterial des Formteils eindringen kann.

Die erfindungsgemäßen elastischen Formteile haben vorzugsweise die Form von Sitzmöbeln oder Sitzmöbelpolstern. Besonders in öffentlichen Verkehrsmitteln, aber auch in öffentlichen Gebäuden müssen solche Sitzmöbel oder Sitzmöbelpolster bestimmte brandschutztechnische Anforderungen erfüllen, die eine wirkungsvolle Brandschutzausrüstung erforderlich machen. Das erfindungsgemäße Verfahren zur Beschichtung elastischer Formteile, bei dem das Beschichtungsmittel
a) ein polymeres Bindemittel und
b) eine blähgraphitenthaltende intumeszierdende Zusammensetzung
enthält, führt zu Formteilen, die besonders wirkungsvoll vor Bränden geschützt sind.

Eine vorteilhafte Ausführungsform des erfindungsgemäßen Verfahrens besteht darin,, daß man die Beschichtung bei der Herstellung eines geschäumten Formkörpers durch Mischung des brandschützenden Beschichtungsmittels mit dem Trennmittel oder durch Einsatz des brandschützenden Beschichtungsmittels als Trennmittel erreicht. Auf diese Weise entfällt der nachträgliche Beschichtungsschritt und die Formkörper erhalten ihre brandschützende Beschichtung schon während des Aufschäumens in den dafür vorgesehenen Formen. In diesem Fall ist es vorteilhaft, die Form vor dem Ausschäumen, gegebenenfalls zusammen oder nach Zugabe des Trennmittels, mit dem Beschichtungsmittel auszusprühen oder auszuschwenken.

Ein Vorteil des Verfahrens und damit verbunden ein Vorteil der erfindungsgemäßen elastischen Formkörper ist darin zu sehen, daß einerseits eine intumeszierende Polymerschicht die Oberfläche des Formkörpers überzieht. Dieser Überzug ist auch im Falle des Wegschmelzens des Schaumstoffes während eines Brandes ausreichend formstabil um eine stabile Schaumhülle um das Formteil zu bilden. Gegebenenfalls kann der Überzug durch Einlegen bzw. Anbringen eines Armierungsgewebes, -gitters oder Vlieses verstärkt werden. Geeignete Armierungsgewebe oder Vliese bestehen aus Glasfasern, Kunststoffen wie PVC oder PE bzw. PP, Baumwolle, Jute oder Draht. Dabei stellen Drahtgewebe zusätzlich einen Schutz gegen mechanische Beschädigungen (Vandalismus) dar. Andererseits dringen Bestandteile der Intumeszenzmischung in den Schaumstoff ein und schützen den Schaumstoff selbst vor einem Brand. Besonders der Blähgraphitzusatz bewirkt ein schnelles und sensibles Ansprechen dieser Schaumstoffoberflächenschicht im Brandfall. Schon bei geringen Initialtemperaturen wird so ein Aufschäumen und damit eine Temperatur- und Feuerbarriere erreicht. Die intumeszierende Polymerschicht auf der Oberfläche des Formkörpers kann auch in Form von entsprechend imprägnierten Geweben, Vliesen oder Netzen aufgebracht werden, wie sie ausführlich in der Deutschen Patentanmeldung P 196 52 352.4 beschrieben sind.

Die erfindungsgemäßen Sitzmöbel und Sitzmöbelpolster finden besonders Verwendung im Fahrzeugbau, insbesondere in öffentlichen Verkehrsmitteln.

### Beispiele

### Beispiel 1

### Beschichtungsmischung auf Butylacrylat-Acrylnitril-Basis:

| | |
|---|---|
| Wasser | 37,95 % |
| Entschäumer, ethoxiliertes Alkylphenol, Lutensol® AP 9 (BASF AG) | 1,15 % |
| Butylglykol | 3,00 % |
| Aluminiumhydroxid (VAW, Vereinte Aluminium-Werke AG) | 19,15 % |
| Blähgraphit, blähfähiger Naturgraphit, C-Gehalt >96 % Blähvolumen 190 - 230 cm³/g, Expan® MBS (Tropag O. Ritter Nachf. GmbH) | 8,11 % |
| Polysaccharidverdicker, Kelzan® S (Lanco) | 0,44 % |
| Ammoniumpolyphosphat | 5,10 % |
| Melamin | 5,10 % |
| Dipentaerythrit | 4,80 % |
| Polysiloxanentschäumer, Byk® 031 (Byk-Chemie) | 0,10 % |
| Butylacrylat-Acrylnitril Copolymer Dispersion (wässrig -50 %ig), Acronal® 35 D (BASF AG) | 15,00 % |
| Grünpigment in wässrig-propandiolhaltiger Dispersion, Colanylgrün® GG 130 (Hoechst AG) | 0,10 % |

Die Einsatzstoffe wurden durch Rühren vermischt. Alle Prozentangaben sind Gew.-% bezogen auf die Gesamtmasse der Mischung.

### Beispiel 2

### Beschichtungsmischung auf Butylacrylat-Acrylnitril-Basis:

| | |
|---|---|
| Wasser | 11,44 % |
| Natriumpolyphosphat mittlerer Kettenlänge, Calgon® N (Benckiser-Knapsack GmbH) | 0,10 % |
| Butylglykol | 0,96 % |
| Aluminiumhydroxid | 34,30 % |
| Blähgraphit, blähfähiger Naturgraphit, C-Gehalt >96 % Blähvolumen 200 - 230 cm³/g, Expan® MBS (Tropag O. Ritter Nachf. GmbH) | 8,80 % |
| Polysaccharidverdicker, Kelzan® S (Lanco) | 0,24 % |
| Butylacrylat-Acrylnitril Copolymer Dispersion (wässrig -50 %ig), Acronal® 35 D (BASF AG) | 24,00 % |
| Polysiloxanentschäumer, Byk® 031 (Byk-Chemie) | 0,16 % |
| Organischer Phosphorsäureester bzw. Phosphorsäurepartialester, Budit® 380 (Chemische Fabrik Buddenheim) | 20,00 % |

### Beispiel 3

### Beschichtungsmischung auf Silikonharz-Basis:

| | |
|---|---|
| Silikonharzemulsion, wässrige Emulsion eines mittelharten Methylphenylsilikonharzes, Silres® MP 42 E (Wacker-Chemie GmbH) | 58,60 % |
| Natriumpolyphosphat mittlerer Kettenlänge, Calgon® N (Benckiser-Knapsack GmbH) | 0,20 % |
| Butylglykol | 1,00 % |
| Aluminiumhydroxid | 30,00 % |
| Zinkborat | 0,90 % |
| Blähgraphit, blähfähiger Naturgraphit, C-Gehalt >96 % Blähvolumen 200 - 230 cm³/g, Expan® MBS (Tropag O. Ritter Nachf. GmbH) | 9,00 % |
| Polysaccharidverdicker, Kelzan® S (Lanco) | 0,10 % |
| Polysiloxanentschäumer, Byk® 031 (Byk-Chemie) | 0,20 % |

### Beispiel 4

### Beschichtungsmischung auf Polyvinylacetat-Basis:

| | |
|---|---|
| Polyvinylacetatdispersion (wässrig -50 %) Vinofan® V 800 (BASF AG) | 41,36 % |
| Wasser | 18,61 % |
| Netzmittel, Lumiten® IRA (BASF AG) | 0,60 % |
| Polysiloxanentschäumer, Byk® 031 (Byk-Chemie) | 0,10 % |
| Isodecyldiphenylphosphat, Santicizer® 148 (Monsanto GmbH) | 4,20 % |
| Ammoniumpolyphosphat, Hostaflam® AP 422 (Hoechst AG) | 12,90 % |
| Dicyandiamid | 9,40 % |
| Dipentaerythrit | 7,80 % |
| Blähgraphit, blähfähiger Naturgraphit, C-Gehalt >96 % Blähvolumen 200 - 230 cm³/g, Expan® MBS (Tropag O. Ritter Nachf. GmbH) | 5,03 % |

### Beispiel 5

### Beschichtungsmischung auf Silikonharz-Basis zur Gummihaar-Sitzbeschichtung:

| | |
|---|---|
| Silikonharzemulsion, wässrige Emulsion eines mittelharten Methylphenylsilikonharzes, Silres® MP 42 E (Wacker - Chemie GmbH) | 40,00 % |
| Natriumpolyphosphat mittlerer Kettenlänge, Calgon® N (Benckiser-Knapsack GmbH) | 0,20 % |
| Butylglykol | 0,20 % |
| Aluminiumhydroxid | 30,00 % |
| Zinkborat | 0,3 % |
| Blähgraphit, blähfähiger Naturgraphit, C-Gehalt >96 % Blähvolumen 200 - 230 cm³/g, Expan® MBS (Tropag O. Ritter Nachf. GmbH) | 9,00 % |
| Polysaccharidverdicker, Kelzan® S (Lanco) | 0,10 % |
| Polysiloxanentschäumer, Byk® 031 (Byk-Chemie) | 0,20 % |
| Phosphorsäurepartialester, Budit® 380 (Chemische Fabrik Buddenheim) | 15,00 % |
| Wasser | 5,00 % |

### Beispiel 6

### Brandprüfung im Bunsenbrennertest:

Für den Bunsenbrennertest wurden PUR-Schaumstoffblöcke (Typ Elastoflex® W 5662, Elastogran, Olching) der Maße 200 x 200 x 50 mm mit intumeszierenden Massen der Beispiele 1 - 4 bestrichen und in einer Halterung aus Stahl senkrechtstehend befestigt. Zum Vergleich wurden zusätzlich ein unbeschichtetes Nullmuster sowie zwei PUR-Blöcke mit der Feuerschutzbeschichtung nach DE 30 18 890, Beispiel 1, mit unterschiedlichen Auftragsmengen bereitgestellt.

Die Auf tragsmengen betrugen für PUR-Prüfkörper nach Beispiel 1 - 4 ca. 250 g/m². Die Schaumstoffklötzchen, die nach DE 30 18 890, Beispiel 1, behandelt wurden, hatten ein Auftragsgewicht von 250 g/m² und 1150 g/m².

Zur Überprüfung des Abrutschverhaltens, der Rauchgasentwicklung und der Durchbrandgeschwindigkeit wurde eine Bunsenbrennerbeflammung durchgeführt (Temperatur ca. 900°C). Der Bunsenbrenner wurde so zentriert, daß die Flammspitze in das Zentrum des PUR-Blockes wies. Der Abstand Oberkante Bunsenbrenner/PUR-Blockoberfläche betrug 20 cm.

Wie aus Tabelle 1 zu entnehmen ist, wurde beim unbeschichteten Nullmuster schon nach 1 Min. und 10 Sec. Durchbrand festgestellt. Auffällig war das schnelle Abrutschen des geschmolzenen PUR. Desweiteren wirkte das unbeschichtete Material stark brandunterstützend und tropfte brennend ab. Auch die nach DE 30 18 890 beschichteten PUR-Klötze zeigten eine schlechtere Brandresistenz als die erfindungsgemäß beschichteten Prüfkörper.

### Beispiel 7

### Brandprüfung nach DIN 54 341

Diese Norm beschreibt ein Verfahren zur Bestimmung des Brennverhaltens von Polsteraufbauten, bestehend aus Sitzteil und Rückenlehne, wie sie z.B. in Schienenfahrzeugen des öffentlichen Personenverkehrs verwendet werden.

Der Versuchsaufbau des Polsterverbundes für diese Prüfung entsprach DIN 54 341 (siehe Abbildung dort).
Die Testsitze hatten folgende Maße:
Sitz: Länge 47 cm, Breite 45 cm, Stärke 6 cm
Rückenlehne: Länge 55 cm, Breite 44 cm, Stärke 9 cm

Geprüft wird der komplette Polsterverbund bestehend aus Schaumstoff und Bezugsstoff. Als Bezugsstoff wurde Trevira® CS, Azur verwendet. Neben einem unbeschichteten Nullmuster wurden die intumeszierenden Beschichtungen nach den Beispielen 1 - 4 sowie nach DE 30 18 890, Beispiel 1 auf PUR-Formteile des Schaumstofftyps Elastoflex® W 5662 aufgetragen.

Der Auftrag erfolgte durch Spritzen bei einem Luftdruck von ca. 8 bar (Durchmesser der Düse 2,0 mm), Abstand der Düse zum Polsterverbund ca. 30 cm. Die Auftragsmengen lagen für die erfindungsgemäßen Beispiele 1 - 4 zwischen 200 und 250 g/m². Der Sitz nach DE 30 18 890, Beispiel 1 wurde mit einer Auftragsmenge von 1145 g/m² beschichtet. Dieser Sitz zeigte im trockenen Zustand starke Versprödungserscheinungen und neigte bei mechanischer Beanspruchung zu Brüchen und Rißbildungen. Als Zündquelle für die Prüfung diente ein nach der DIN 54 351 angefertigtes Papierkissen.

Entsprechend der DIN wurden folgende Kriterien zur Beurteilung des Brandverhaltens herangezogen (Tabelle 2).
a) Eigenflammen müssen innerhalb der Prüfzeit von 15 Minuten erloschen sein,
b) maximale Flammenhöhen, gemessen ab der Oberkante Rückenlehne, müssen unter 45 cm bleiben,
c) das Brandgeschehen muß nach der fünften Versuchsminute abnehmende Tendenz aufweisen,
d) die Seitenkanten des Polsterverbundes dürfen von der Flammenfront nicht erreicht werden.

Sämtliche melaminhaltigen PUR-Sitze (Material Elastoflex® W 5662) in Kombination mit Bezugstoff, die mit den Beschichtungsmassen nach den Beispielen 1 - 4 beschichtet wurden, entsprachen der Norm (Tabelle 2).

Die Selbstverlöschungszeiten lagen zwischen 5 Minuten, 50 Sekunden (Beispiel 3) und 11 Minuten, 30 Sekunden (Beispiel 1). Die Nachglimmdauer betrug nur wenige Sekunden. Durch das rasche Ansprechen der Intumeszenzbeschichtung trat im Verlauf des Versuchs schon nach 3 - 4 Min. eine deutliche Reduktion der Flammenintensität ein. Der sich bildende Thermoschaum verhinderte das schnelle Abrutschen des schmelzenden PUR. Durch zunehmende "Keramisierung" blieb die Beschädigung auf den Bereich der Zündquelle des Sitz teils beschränkt. Die Brandschäden im Rückenlehnenbereich waren äußerst gering.

Eine Ausbreitung der Flammenfront über die Seitenkanten wurden in keinem der erfindungsgemäßen Beispiele beobachtet.

Weder das Nullmuster noch der nach DE 30 18 890 beschichtete Sitz konnten den Anforderungen der Brandprüfung gerecht werden. Bei beiden führte das schmelzende PUR zu einer starken Intensivierung des Brandgeschehens. Durch das Wegschmelzen des Bezugstoffs und die sich dabei bildenden Kamineffekte wurde dieser Prozeß beschleunigt.

### Beispiel 8

### Brandversuch nach DIN 54 341 an einem Gummihaarsitz:

Sitze dieses Typs wurden ebenfalls nach DIN 54 341 auf ihre brandschutztechnischen Eigenschaften geprüft.

Gummihaarsitze wurden im Sitz- und Rückenlehnenbereich mit den intumeszierenden Massen nach den Beispielen 4 und 5 beschichtet. Der Auftrag erfolgte ebenfalls durch Spritzen bei 8,0 bar Druck mit einem Düsendurchmesser von 2,0 mm. Die Auf tragsmenge lag zwischen 235 g/m² und 280 g/m² (s. Tabelle 2). Beide derartig ausgestatteten Sitze konnten die Prüfanforderungen erfüllen.

### Beispiel 9

### Test zur Klimabeständigkeit:

PUR-Schaumstoff-Probekörper der Maße 200 x 200 x 50 mm, die nach den Beispielen 1 - 4 beschichtet wurden, wurden einer Prüfung auf Klimabeständigkeit ausgesetzt. Die Auftragsmengen lagen jeweils bei 200 - 250 g/m². Zum Vergleich wurden entsprechend beschichtete Klötzchen als Rückstellmuster bei RT gelagert.

### Tropenklimalagerung

21 Tage im Prüfklima 40/92 - 1 DIN 50 015. Beurteilung von Veränderungen am Prüfling wurden sofort nach beendeter Lagerung durchgeführt. Es konnten keine optischen Veränderungen der beschichteten Klötzchen festgestellt werden.

Des weiteren wurde Massenkonstanz festgestellt.

### Tropenklima-Wechsellagerung (VDA-Test Prüfblatt 621 - 412)

Die Prüflinge wurden einer Tropenklima-Wechsellagerung unterzogen. Dazu werden sie erst 8 h bei 40°C und 95 % rel. Luftfeuchtigkeit, dann 16 h bei 23°C und 55 % rel. Luftfeuchtigkeit gelagert. Nach drei Wiederholungen dieses Rhythmus wurde für 72 h bei 23°oC und 55 % rel. Luftfeuchtigkeit gelagert. Der gesamte Zyklus wurde dreimal durchgeführt, so daß die Gesamtprüfdauer 3 Wochen betrug. Nach beendeter Prüfung fand eine optische Beurteilung der Prüfkörper statt. Im Vergleich mit den bei RT gelagerten Klötzchen wurden keinerlei Veränderungen festgestellt. Ein Massenverlust wurde nicht festgestellt.

### Beispiel 10

### Test zur mechanischen Beständigkeit:

Die mit Beschichtungen nach Beispiel 1 - 4 versehenen Sitze (Tabelle 2) wurden im Dauerschwingversuch nach DIN 53 574 geprüft. Nach 80 000 Lastwechseln wurde bei den 4 beschichteten Formteilen visuell keine Veränderung gegenüber dem Nullmuster festgestellt. Der Höhenverlust lag bei ≤ 1 % und der Härteverlust betrug 2,5 - 3,5 %.

**Tabelle 1**

| Brandverhalten von Prüfkörpern im Bunsenbrennertest | | | | |
|---|---|---|---|---|
| Beschichtung | Auftragsmenge (g/m² | Brandverhalten | | Durchbrandzeit (s) |
| | | (brenn. Abtropf. | Rauchgasentw.) | |
| Nullmuster | - | + | gering | 1′10˝ |
| Beispiel 1 | 210 | - | mäßig | 2′30˝ |
| Beispiel 2 | 250 | - | mäßig | 2′53˝ |
| Beispiel 3 | 235 | - | gering | 3′48˝ |
| Beispiel 4 | 223 | - | gering | >5′ |
| Referenz I (nicht erfindungsgemäß, gemäß DE 30 18 850, Bsp. 1) | 252 | + | mäßig | 1′30˝ |
| Referenz II (nicht erfindungsgemäß, gemäß DE 30 18 850, Bsp. 1) | 1145 | + | mäßig | 1′55˝ |

**Tabelle 2**

| Brandverhalten von Prüfkörpern im Test gemäß DIN 54 341 | | | | | |
|---|---|---|---|---|---|
| Beschichtung | Auftragsmenge | Selbstverlöschung | Nachglimmdauer | Max. Flammhöhe ab Oberkante Lehne | Brandverlauf |
| Nullmuster | - | gelöscht n. 8′ | - | 45 cm | Tendenz steigend n. 4′ |
| Beispiel 1 | 200 g/m² | 11′30˝ | 30˝ | ±0 | Tendenz fallend n. 4′ |
| Beispiel 2 | 223 g/m² | 9′38˝ | 22˝ | ±0 | Tendenz fallend n. 3′20˝ |
| Beispiel 3 | 242 g/m² | 7′35˝ | 15˝ | ±0 | Tendenz fallend n. 3′20˝ |
| Beispiel 4 | 195 g/m² | 5′50˝ | 12˝ | ±0 | Tendenz fallend n. 3′ |
| Referenz gemäß DE 30 18 890, Bsp. 1 (nicht erfindungsgemäß) | 1145 g/m² | gelöscht nach 8′ | - | 75 cm | Tendenz stark steigend n. 5′ *) |
| Gummihaar, Beschichtung gemäß Bsp. 4 | 280 g/m² | 4′30˝ | 3′ | ±0 | Tendenz fallend n. 3′ |
| Gummihaar, Beschichtung gemäß Bsp. 5 | 235 g/m² | 4′00 | 2′25˝ | ±0 | Tendenz fallend n. 3′ |

## Patentansprüche

1. Elastische Formteile, welche mit einer Mischung bestehend aus
a) einem polymeren Bindemittel und
b) einer blähgraphitenthaltenden intumeszierenden Zusammensetzung
beschichtet sind.

2. Elastische Formteile nach Anspruch 1, dadurch gekennzeichnet, daß die Komponente a) ein Kunstharz oder eine Kunstharzdispersion oder eine Mischung mehrerer Kunstharze oder Kunstharzdispersionen ausgewählt aus der Gruppe bestehend aus Silikonen, Kautschuk, Polyacrylat, Styrolcopolymeren, Ethylencopolymeren, Polyvinylacetat und Polyvinylchlorid ist.

3. Elastische Formteile nach Anspruch 1 oder 2, dadurch gekennzeichnet, daß die Komponente a) eine Silikonharzdispersion ist.

4. Elastische Formteile nach den Ansprüchen 1 bis 3, dadurch gekennzeichnet, daß die Komponente b)
b1) Blähgraphit,
b2) eine phosphorhaltige Stickstoffverbindung,
b3) einen Polyalkohol sowie
b4) gewünschtenfalls ein Treibmittel und
b5) gewünschtenfalls weitere Zusatzstoffe
enthält.

5. Elastische Formteile nach den Ansprüchen 1 bis 4, dadurch gekennzeichnet, daß die Beschichtung mit einem Armierungsgewebe, -gitter oder -vlies verstärkt ist.

6. Elastische Formteile nach den Ansprüchen 1 bis 5, dadurch gekennzeichnet, daß der Grundkörper dieser Formteile aus Schaumstoff besteht.

7. Elastische Formteile nach Anspruch 6, dadurch gekennzeichnet, daß der Schaumstoff ein Polyurethanschaumstoff ist.

8. Elastische Formteile nach den Ansprüchen 1 bis 7 in der Form von Sitzmöbeln oder Sitzmöbelpolstern.

9. Verfahren zur Beschichtung von elastischen Formteilen gemäß den Ansprüchen 1 bis 8, dadurch gekennzeichnet, daß das Beschichtungsmittel
a) ein polymeres Bindemittel und
b) eine blähgraphitenthaltende intumeszierende Zusammensetzung
enthält.

10. Verfahren zur Beschichtung von elastischen Formteilen nach Anspruch 9, dadurch gekennzeichnet, daß man die Beschichtung bei der Herstellung eines geschäumten Formkörpers durch Mischung des brandschützenden Beschichtungsmittels mit dem Trennmittel oder durch Einsatz des brandschützenden Beschichtungsmittels als Trennmittel erreicht.

11. Verwendung von Sitzmöbeln oder Sitzmöbelpolstern gemäß Anspruch 8 im Fahrzeug- und Flugzeugbau.
